# EUROPEAN PATENT SPECIFICATION

(11) **EP 0 508 674 B1**
(45) Date of publication and mention of the grant of the patent: **10.07.1996**
(21) Application number: 92302880.7
(22) Date of filing: 02.04.1992
(51) Int. Cl.: G02B 6/42, G02B 6/36

(54) **Fibre optics connector**
Faseroptischer Stecker
Connecteur à fibre optique

(30) Priority: 11.04.1991 GB 9107657
(43) Date of publication of application: 14.10.1992
(73) Proprietor: THE WHITAKER CORPORATION, Wilmington, Delaware 19808 (US)
(72) Inventor: Kaminski, Christopher, London E7 8AN (GB); Baker, Robert William, Kenton, Middlesex HA3 8LF (GB)
(74) Representative: Warren, Keith Stanley

(56) References cited:
- EP-A- 0 015 309
- EP-A- 0 103 527
- EP-A- 0 168 023
- US-A- 4 268 756

## Description

This invention relates to a fibre optics connector for optically connecting an optical cable to an active electro-optical device, and particularly concerns such a connector for mounting on a printed circuit board to connect the electro- optical device electrically to conductors on the printed circuit board. The electro-optical device may be either light receiving or light transmitting.

Electro-optical devices are commonly used in motor or temperature control means which are installed on-site by electricians who have no special tooling or skills applicable to terminating optical cables, their main experience being in the termination of copper cables.

Known equipment, such as that disclosed in EP-A-168 023, for terminating an optical cable to conductors of a printed circuit board, comprises a socket assembly for mounting on a printed circuit board and containing an electro-optical device which is built into the socket assembly, and a cable mounting assembly for mating with the socket assembly. In order to provide the cable and plug assembly, a fibre optical cable must be correctly terminated to the plug of the assembly. This invention is intended to provide a fibre optics connector to which an optical cable can be terminated without the need for any tool but a screwdriver, or any skill in terminating optical cables, and which exerts a positive retention force upon the cable.

The present invention consists in a fibre optics connector for optically connecting an optical cable to an active electro-optical device, the connector comprising:a body having a base portion; a flexible beam extending from the body in spaced, superposed relationship over the surface of the base portion, the base portion and the beam defining a rectilinear channel for receiving the optical cable; and a receptacle formed in the body at the inner end of the channel for receiving the electro-optical device, said receptacle having an optical window therein aligned with, and facing, said inner end of the channel, characterised by means on the body pivotally supporting an operating lever having a cam surface located over the beam, the lever being movable between a cable insertion first angular position in which the cam surface is disengaged from the beam so as to allow an end of the cable to be inserted via the outer other end of the channel into light transmitting or light receiving relationship with the optical window when the electro-optical device is received in the receptacle, and a cable retention second angular position in which the cam surface engages the beam and urges the beam against the cable, whereby the cable is clamped between opposed surfaces of the beam and the base.

In use, the connector may be mounted, for example, in a field box where access to the lever can only be had, according to the construction of the field box, either from the direction of insertion of the cable into the connector, that is to say from the side, or from above. In order to allow for these exigencies, the lever may be mountable to the support means either for movement through a first arc which will allow the lever to be operated from the cable insertion direction or through a second arc which will allow the lever to be operated from above. To this end, the lever may have discrete cam surfaces which are located for its operation in respective ones of these two modes.

For long life firm retention of the cable, the lever may be arranged to deform the beam elastically about the cable, the beam thereby acting on an energy storing means. The lever may therefore be provided with cam surfaces that are spaced from one another transversely of the length of the beam so as to engage it on opposite sides of the channel.

The lever may be provided with opposed cam surfaces so as to enable it to be mounted to the support means in either of two opposite orientations so as to avoid the possibility of the lever being inadvertently mounted to the support means in the wrong orientation.

In order to enable the connector to be mounted to a printed circuit board, the base may be provided with a pin for interference fitting into a hole in the circuit board, with a comb for guiding the leads of the electro-optical device so that they extend parallel to the pin, and with a keyhole slot for receiving a flanged soldering eyelet for reception in a further hole in the printed circuit board. In order to avoid displacement of the eyelet when the connector is being handled before it is mounted to the circuit board, the eyelet preferably fits snugly and frictionally into the keyhole slot.

The body and the lever may each be in the form of a one piece plastics moulding.

An embodiment of the invention will now be described by way of example with reference to the accompanying drawings in which;
Figure 1 is an enlarged isometric view shown partly in section, of a fibre optics connector for optically connecting an optical cable to an active electro- optical device and which is for mounting on a printed circuit board;
Figure 2 is an enlarged axial sectional view of the connector when mounted on the circuit board, showing an optical cable clamped in the connector, and illustrating alternate arcs of movement of an operating lever of the connector;
Figure 3 is an enlarged cross-sectional view of the connector when mounted on the circuit board and showing an optical cable clamped in the connector; and
Figure 4 is an axial sectional view of the connector when mounted on the printed circuit board and illustrating the inspection of the interface between the cable and the optical device.

An electrical connector 2 for optically connecting a plastic jacketed optical cable 4 to an active electro-optical device 6, which may be a light receiving, or a light transmitting, device, is arranged to be mounted on a printed circuit board 8.

The connector 2 comprises a one-piece moulded plastic body 10 having a base 12 for mounting on the circuit board 8, an optical cable cantilever clamping beam 14, a receptacle 16 for the optical device 6 and a pair of opposed mounting lugs 18 for an operating lever 20.

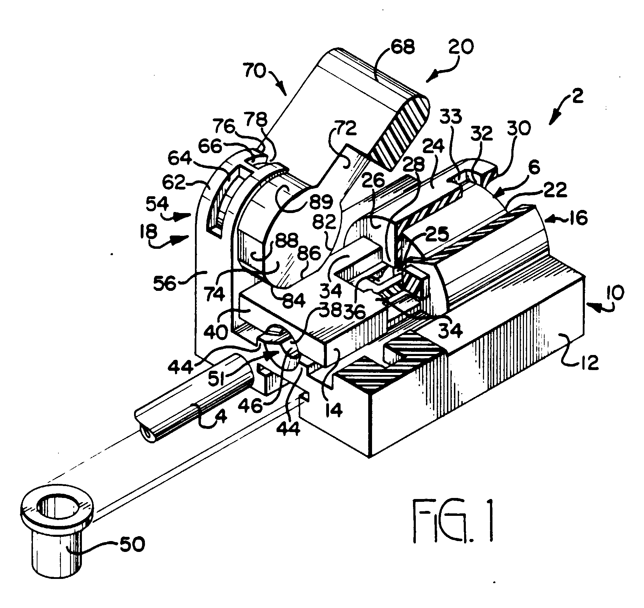

As best seen in Figure 1 the receptacle 16 defines in cooperation with the base 12, a circular cross-section socket 22 for snugly receiving the device 6 which is also of circular cross-section, being for example a T019 can derivative and which has leads 23 projecting from one end thereof and an optical window 25 at the other end thereof. The receptacle 16 has a substantially semi-circular cross-section upper wall 24 projecting from the base 12 and a forward end wall 26 defining a circular,central, optical cable end access opening 28, the receptacle 16 having an open rear end 30. A resilient, optical device retaining latch 32 proximate to the open end 30 projects from the internal surface of the wall 24 into the socket 22. The wall 24 of the receptacle 16 is formed with an inspection opening 33 just forwardly of the latch 32.

As best seen in Figure 1, the beam 14 has at its rear end a pair of mounting legs 34 connected to the forward end wall 26 of the receptacle 16, the legs 34 defining an inspection aperture 26 therebetween. The beam 14 is stiffly and resiliently flexible towards the base 12 and can also be flexed transversely of its length. The beam 14 defines an arcuate cross-section, cable receiving, longitudinal groove 38 opening towards the base 12 and extending from the forward face 40 of the beam 14 to its rear face 42, between the legs 34. The base 12 has on its upper surface, forwardly of the receptacle 16, a pair of spaced ribs 44 which define an arcuate cross-section, cable receiving groove 46 opposite to, and aligned with, the groove 38 of the beam 14 and extending up to the socket 22 of the receptacle 16, the grooves 38 and 46 cooperating to define a cable receiving channel. The groove 38 has therein, cable jacket gripping ribs 49. At their forward ends, the grooves 38 and 46 define a flared, cable end guiding mouth (51). The base 12 defines an optical device stop shoulder 47 at the forward end of the receptacle 16. The underside of the base 12 is formed with a keyhole slot 48 for receiving a flanged soldering eyelet 50 with a snug frictional fit. There depends from the base 12, a pin 52 for interference fitting into a hole in the circuit board 8. A spacer comb 53, for the leads 23 of the optical device 6 projects rearwardly from the base 12.

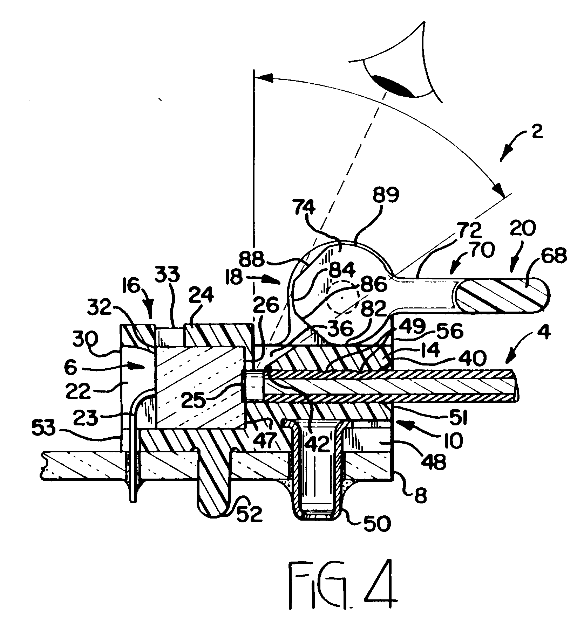

The mounting lugs 18 which are connected to opposite sides of the base 12, as shown in Figures 1 to 3 are hollow, having arcuate top walls 54, parallel, rectilinear end walls 56 and outer side walls 58. Each wall 54 has a smooth, arcuate internal bearing surface 60 and a smoothly arcuate outer surface 62. The outer surface 62 of each wall 54 is formed with two angularly spaced, elongate channels 64 and 66, respectively, extending peripherally of the wall 54. The inner side of each lug 18 is open as best in Figure 3.

The operating lever 20, which is a one-piece plastics moulding, comprises a transverse handle 68 from opposite ends of which extend opposed legs 70. Each leg 70 has a wider part 72 connected to the handle 68, and from which extends a narrow cam part 74 as best seen in Figure 3, the parts 72 and 74 of each leg 70 cooperating to define an outwardly projecting shoulder 76 from which extends downwardly a spigot 78. There projects from the outer side of the part 74 of each arm 70 a trunnion 80 intermediate the ends of the part 74. The edge of each cam part 74 is formed with first and second rounded cam surfaces 82 and 84, respectively, for applying pressure to the beam 14. The cam surface 84 is bounded by flats 86 and 88 respectively, the flat 86 lying between the cam surfaces 82 and 84, a further rounded cam surface 89 on the edge of the cam part 74, being opposed to the cam surface 82, and the flat 88 being between the cam surfaces 84 and 89.

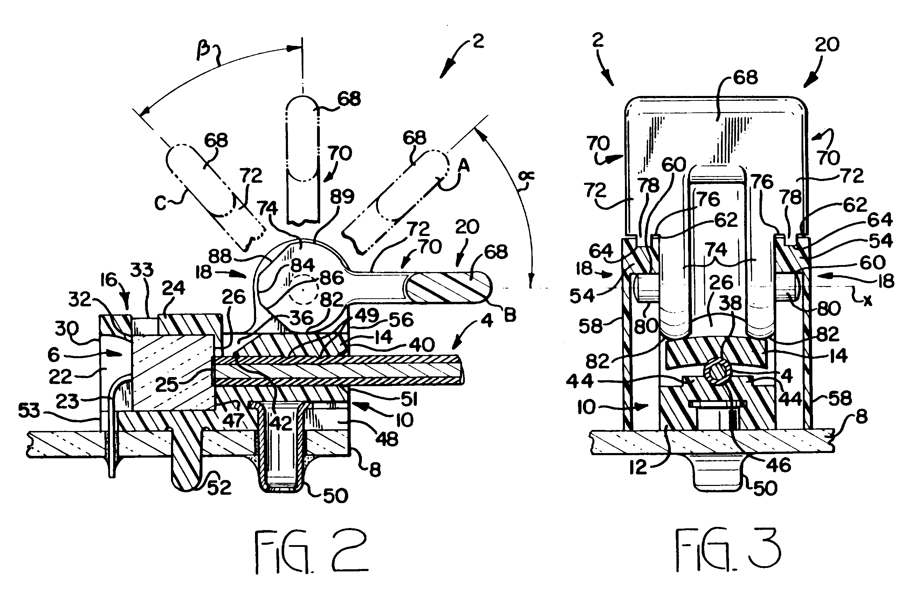

Before mounting the connector 2 to the circuit board 8, the operating handle 20 is assembled to the lugs 18 for angular movement about an axis X, by inserting the spigots 78 either into respective channels 64 or respective channels 66, after pressing the legs 70 resiliently, slightly towards each other to allow the trunnions 80 to be lodged under the arcuate bearing surfaces 60 of the walls 54 of the lugs 18. The elastic deformation of the legs 70 that is required when mounting the operating handle 20 to the lugs 18 is slight, since in practice, the trunnions 20 will have a length only of, the order of 1mm. The active optical device 6 is inserted into the socket 22 of the receptacle 16 so as resiliently to depress the latch 32, which resiles when the device 6 has been fully inserted the socket 22, to retain the device 6 against withdrawal therefrom. In the fully inserted position of the device 6, its forward end abuts the wall 26 and the stop shoulder 47, of the receptacle 16, the leads 23 of the element 6 extend between the teeth of the spacer comb 53, and the optical window 25 is aligned with the access opening 28. The correct positioning of the element 6 in the socket 22, can be visually checked by way of the inspection opening 33. As an alternative to the provision of the latch 32, the wall 24 of the receptacle 16 could be deformed under heat to secure the device 6 in the socket 22. The eyelet 50 is inserted home into the slot 48 in the base 12, being retained therein by virtue of its snug frictional fit in the slot 48. In order to mount the connector 2 to the board 8, the ends of the leads 23, the eyelet 50 and the pin 52 are inserted through respective holes in the circuit board 8, the pin 52 cooperating with the eyelet 50 to align the connector 2 from the board 8 and to retain it thereon during a subsequent soldering operation in which the leads 23 and the eyelet 50 are soldered to the board 8, as shown in Figures 2 to 4.

If the spigots 78 are inserted into the channels 64 (Figures 2 to 4), the operating lever 20 is moveable to an extent limited by the engagement of the spigots 78 against the ends of the channels 64, through an angled of about 45° between a cable insertion position A in Figure 2 and a cable gripping position B in Figure 2, whereby the lever 20 can be operated when access to the lever 20 can be had from the front of the connector 2, for example where the connector 2 is mounted in a field box which is open, laterally, in the cable insertion direction but is closed at the top. In position A of the lever 20, the flats 86 face the beam 14 so that it remains in an open, cable receiving position away from the base 14, to allow the cable 6 to be inserted through the cable receiving grooves 38 and 46 by way of the cable end guiding mouth 51 defined thereby, ideally, to dispose the cable end against the optical window 25 of the optical device 6. As the lever 24 is moved from its angular position A to its angular position B the cam surfaces 82 force the beam 14 down into a closed, cable gripping position against the jacket of the cable 4, so that with the aid of the ribs 49, the cable 4 is securely retained between the beam 14 and the base 12 (Figures 2 to 4). As shown in Figure 3, the cam surfaces 82 engage the beam 14 on opposite sides of the grooves 38 and 46, so that the beam 14 is resiliently bent in a direction transversely of its length, so that the beam 14 restores energy for long life clamping of the cable 4 and to absorb tolerance variations that may arise for example, from temperature fluctuations.

If, however, the spigots 78 are inserted into the channels 66 (Figure 1), the lever 20 is moveable to an extent limited by engagement of the spigots 78 against the ends of the channels 66, through an angle B, of about 45° between a cable insertion position C in Figure 2 and a cable gripping position D in Figure 2, the flats 88 facing the beam 14 in position C and the cam surfaces 84 forcing the beam 14 down against the cable 4 in position D, the action of the cam surfaces 84 being analagos to that of the cam surfaces 82. By inserting the spigots 78 into the channels 66, it is enabled that the lever 20 can be operated where access thereto can only be had from above, for example where the connector 2 is mounted in a field box which is open at the top but which is laterally closed excepting for a cable insertion opening.

As indicated in Figure 4, the inspection aperture 36 which gives a line of sight, indicated in Figure 4 to the interface between the optical window 25 and the cable end, allows the operator visually to inspect the position of the cable end after termination of the cable 4 or during service, any backing off of the cable end away from the window 25 being thereby visually evident as shown in Figure 4. In order to assist the operator in properly positioning the cable end against the window 25, the cable jacket and the device 6 should be of contrasting colour. Also in order so to assist the operator, part of the wall 26 may be cut away in such a way as to improve the operators view of the window 25.

By virtue of the provision of the cam surfaces 89 the cam parts 74 are symmetrical so that even if the lever 20 is mounted to the lugs 18 in the opposite orientation to that shown, the lever 20 will still operate in a manner analogous to that described above.

## Claims

1. A fibre optics connector (2) for optically connecting an optical cable (4) to an active electro-optical device (6), the connector comprising: a body (10) having a base portion (12); a flexible beam (14) extending from the body (10) in spaced, superposed relationship over the surface of the base portion (12), the base portion and the beam defining a rectilinear channel (38,46) for receiving the optical cable (4); and a receptacle (16) formed in the body at the inner end of the channel for receiving the electro-optical device (6), said receptacle having an optical window (25) therein aligned with, and facing, said inner end of the channel (38,46), characterised by means (18) on the body (10) pivotally supporting an operating lever (20) having a cam surface (82) located over the beam, the lever being movable between a cable insertion first angular position in which the cam surface (82) is disengaged from the beam (14) so as to allow an end of the cable (4) to be inserted via the outer other end of the channel (38,46) into light transmitting or light receiving relationship with the optical window (25) when the electro-optical device (6) is received in the receptacle (16), and a cable retention second angular position in which the cam surface (82) engages the beam and urges the beam (14) against the cable, whereby the cable is clamped between opposed surfaces of the beam (14) and the base (12).

2. A connector as claimed in claim 1, wherein the operating lever (20) has a further cam surface (84) and is adjustable on said support means (18) for movement between a cable receiving third angular position in which the further cam surface (84) is disengaged from the beam (14) and a cable retention fourth angular position in which the further cam surface (84) engages the beam and urges the beam against the cable (4), said third and fourth angular positions being angularly spaced from said first and second angular positions.

3. A connector as claimed in claim 2, wherein the operating lever (20) is movable between its first and second angular positions when the end of the lever (20) is close to the outer end of the channel (38,46), the lever (20) being movable between its third and fourth angular positions when the lever (20) projects above the flexible beam (14) in a direction transverse to the beam (14).

4. A connector as claimed in claim 1, 2 or 3, wherein a flat surface (86) on the operating lever (20) faces the beam (14) in said first angular position of the lever, the flat surface (86) adjoining the, or each, cam surface (82,84) of the lever (20).

5. A connector as claimed in claim 2 or 3, wherein respective flat surfaces (86,88) on the lever (20) face the beam (14) in the first and third angular positions of the lever, one of said flat surfaces (86) adjoining both of the cam surfaces.

6. A connector as claimed in claim 5, wherein the lever (20) has yet a further cam surface (89) opposite to one of said cam surfaces (82) so that the lever can be positioned on the support means (18) in either of two orientations.

7. A connector as claimed in claim 2, 3, 5 or 6, wherein said support means (18) for the lever (20) comprises a first channel (64) for receiving a spigot (78) on the lever guiding the movement of the lever (20) between its first and second angular positions and a second channel (66) angularly spaced from the first channel (64) for receiving the projection (78) for guiding the movement of the lever (20) between its third and fourth angular positions.

8. A connector as claimed in claim 1, wherein the lever (20) comprises two legs (74) spaced from each other transversely across the beam (14), one of said legs (74) terminating in said cam surface (82), the other leg (74) terminating in a similar cam surface (82), said cam surfaces (82) engaging the beam (14) on opposite sides of the cable (4), in the second angular position of the lever, resiliently to flex the beam (14) about the cable.

9. A connector as claimed in claim 8, wherein said support means (18) comprises a pair of lugs (58) upstanding from the base (12) on either side of the beam (14) each lug (58) having an arcuate top wall (60), whereby a trunnion (80) on each leg (74) is engaged under the top wall (60) of a respective one of the lugs (58), and a spigot (78) projects from the lever (20) over each trunnion (80) and is slidably engageable in a peripheral channel (64) in the upper surface of the arcuate top wall (54).

10. A connector as claimed in Claim 9, wherein each leg (74) terminates in a further cam surface (89) angularly spaced from the first mentioned cam surface (82), the upper surface (62) of each top wall (54) being formed with a further peripheral channel (66) angularly spaced from the first mentioned peripheral channel (64), each spigot (78) being slidably engageable in a respective one of said further peripheral channels (64,66) whereby the lever (20) has a cable receiving third angular position in which each of said further cam surfaces (89) is disengaged from the beam (14) and a cable retention fourth angular position in which each of said further cam surfaces (89) engages the beam (14) on a respective side of the cable (4) to urge the beam (14) against the cable (4).

11. A connector as claimed in any one of the preceding claims, wherein the base (12) comprises a pin (52) projecting therefrom for interference fitting into a hole in a printed circuit board (8), a lead spacer comb (53) projecting from the base (12), beyond the receptacle (16), for receiving leads (23) of the electro-optical device (6) so that end portions of the leads (23) can project from the base (12) in parallel relationship with the pin (52).

12. A connector as claimed in any one of the preceding claims, wherein the base (12) is formed with a key hole slot (48) opening in a direction away from the beam (14), for snugly and frictionally receiving a flanged soldering eyelet (50), inserted into the key hole slot (48) from the end of the base remote from the receptacle (16).

## Patentansprüche

1. Faseroptischer Verbinder (2) zum optischen Verbinden eines optischen Kabels (4) mit einer aktiven elektro-optischen Vorrichtung (6), wobei der Verbinder aufweist: einen Hauppteil (10) mit einem Boden (12); einen flexiblen Balken (14), der sich von dem Hauptteil (10) in beabstandeter überlagernder Beziehung oberhalb der Oberfläche des Bodens (12) erstreckt, wobei der Boden und der Balken einen geradlinigen Kanal (38, 46) zur Aufnahme des optischen Kabels (4) definieren; und eine Aufnahme (16), die in dem Hauptteil an dem inneren Ende des Kanals zur Aufnahme der elektro-optischen Vorrichtung (6) ausgebildet ist, wobei die Aufnahme ein optisches Fenster (25) trägt, das mit dem inneren Ende des Kanals (38, 46) ausgerichtet ist und auf dieses zu weist, **gekennzeichnet** durch eine Einrichtung (18) an dem Hauptteil (10), die einen Betätigungshebel (20) schwenkbar abstützt, der eine Nockenfläche (82) hat, die oberhalb des Balkens angeordnet ist, wobei der Hebel bewegbar ist zwischen einer ersten Winkelstellung zum Einsetzen des Kabels, in der die Nockenfläche (82) von dem Balken (14) getrennt ist, um es einem Ende des Kabels (4) zu gestatten, durch das äußere andere Ende des Kanals (38, 46) in lichtübertragende oder lichtaufnehmende Beziehung mit dem optischen Fenster (25) eingesetzt zu werden, wenn die elektro-optische Vorrichtung (6) in der Aufnahme (16) aufgenommen ist, und einer zweiten Winkelstellung zur Kabelhalterung, in der die Nockenfläche (82) an dem Balken angreift und den Balken (14) gegen das Kabel drückt, wodurch das Kabel zwischen einander gegenüberliegenden Oberflächen des Balkens (14) und des Bodens (12) eingeklemmt ist.

2. Verbinder nach Anspruch 1, bei dem der Betätigungshebel (20) eine weitere Nockenfläche (84) hat und an der Stützeinrichtung (18) einstellbar ist zur Bewegung zwischen einer dritten Winkelstellung zur Aufnahme eines Kabels, in der die weitere Nockenfläche (84) von dem Balken (14) getrennt ist, und einer vierten Winkelstellung zur Halterung des Kabels, in der die weitere Nockenfläche (84) an dem Balken angreift und den Balken gegen das Kabel (4) drückt, wobei die dritten und vierten Winkelstellungen winkelmäßig von den ersten und zweiten Winkelstellungen beabstandet sind.

3. Verbinder nach Anspruch 2, bei dem der Betätigungshebel (20) zwischen seinen ersten und zweiten Winkelstellungen bewegbar ist, wenn das Ende des Hebels (20) nahe dem äußeren Ende des Kanals (38, 46) ist, und wobei der Hebel (20) zwischen seiner dritten und vierten Winkelstellung bewegbar ist, wenn der Hebel (20) oberhalb des nachgiebigen Balkens (14) in einer Richtung quer zu dem Balken (14) vorragt.

4. Verbinder nach Anspruch 1, 2 oder 3, bei dem eine flache Oberfläche (86) an dem Betätigungshebel (20) in der ersten Winkelstellung des Hebels auf den Balken (14) zu weist, wobei die flache Oberfläche (86) sich an die oder jede Nockenfläche (82, 84) des Hebels (20) anschließt.

5. Verbinder nach Anspruch 2 oder 3, bei dem entsprechende flache Oberflächen (86, 88) des Hebels (20) in den ersten und dritten Winkelstellungen des Hebels auf den Balken (14) zu weisen, wobei eine der flachen Oberflächen (86) sich an beide Nockenflächen anschließt.

6. Verbinder nach Anspruch 5, bei dem der Hebel (20) noch eine weitere Nockenfläche (89) entgegengesetzt zu einer der Nockenflächen (82) hat, so daß der Hebel an der Abstützeinrichtung (18) in jeder von zwei Ausrichtungen positioniert werden kann.

7. Verbinder nach Anspruch 2, 3, 5 oder 6, bei dem die Abstützeinrichtung (18) für den Hebel (20) einen ersten Kanal (64) zur Aufnahme eines Zapfens (78) an dem Hebel aufweist, der die Bewegung des Hebels (20) zwischen seiner ersten und seiner zweiten Winkelstellung führt, sowie einen zweiten Kanal (66), der winkelmäßig gegenüber dem ersten Kanal (64) beabstandet ist, zur Aufnahme des Vorsprungs (78) zum Führen der Bewegung des Hebels (20) zwischen seiner dritten und seiner vierten Winkelstellung.

8. Verbinder nach Anspruch 1, bei dem der Hebel (20) zwei Schenkel (74) aufweist, die voneinander quer zu dem Balken (14) beabstandet sind, wobei einer der Schenkel (74) in der Nockenfläche (82) endet und der andere Schenkel (74) in einer ähnlichen Nockenfläche (82) endet, wobei die Nockenflächen (82) an dem Balken (14) an entgegengesetzten Seiten des Kabels (4) in der zweiten Winkelstellung des Hebels angreifen, um den Balken (14) nachgiebig um das Kabel herum zu verformen.

9. Verbinder nach Anspruch 8, bei dem die Abstützeinrichtung (18) ein Paar von Laschen (58) aufweist, die von dem Boden (12) an jeder Seite des Balkens (14) nach oben vorstehen, wobei jede Lasche (58) eine gekrümmte obere Wand (60) hat, wodurch ein Drehzapfen (80) an jedem Schenkel (74) unter der oberen Wand (60) einer entsprechenden der Laschen (58) ergriffen wird, und wobei ein Zapfen (78) von dem Hebel (20) über jedem Drehzapfen (80) vorragt und gleitfähig in einem Umfangskanal (64) in der oberen Oberfläche der gekrümmten oberen Wand (54) aufnehmbar ist.

10. Verbinder nach Anspruch 9, bei dem jeder Schenkel (74) in einer weiteren Nockenfläche (89) endet, die winkelmäßig von der zuerst genannten Nockenfläche (82) beabstandet ist, wobei die obere Oberfläche (62) jeder oberen Wand (54) mit einem weiteren umfangsmäßigen Kanal (66) ausgebildet ist, der winkelmäßig von dem zuerst genannten umfangsmäßigen Kanal (64) beabstandet ist, wobei jeder Zapfen (78) gleitfähig in einem entsprechenden der weiteren umfangsmäßigen Kanäle in Eingriff bringbar ist, wodurch der Hebel (20) eine dritte Winkelstellung zur Aufnahme des Kabels hat, in der jede der weiteren Nockenflächen (89) von dem Balken (14) getrennt ist, und eine vierte Winkelstellung zur Halterung des Kabels, in der jede der weiteren Nockenflächen (89) an dem Balken (14) an einer entsprechenden Seite des Kabels (4) angreift, um den Balken (14) gegen das Kabel (4) zu drücken.

11. Verbinder nach einem der vorhergehenden Ansprüche, bei dem der Boden (12) einen davon vorragenden Stift (52) zum Festsitz-Eingriff in einem Loch in einer gedruckten Schaltungsplatte (8) aufweist, wobei ein Leiterabstandskamm (53) von dem Boden (12) über die Aufnahme (16) hinaus vorragt, um Leiter (23) der elektro-optischen Vorrichtung (6) aufzunehmen, so daß Endabschnitte der Leiter (23) von dem Boden (12) in paralleler Beziehung zu dem Stift (52) vorragen können.

12. Verbinder nach einem der vorhergehenden Ansprüche, bei dem der Boden (12) mit einem Keillochschlitz (48) ausgebildet ist, der sich in einer Richtung weg von dem Balken (14) öffnet, um eng passend und reibungsmäßig eine mit einem Flansch versehene Lötöse (50) aufzunehmen, die in den Keillochschlitz (48) von dem Ende des Bodens entfernt von der Aufnahme (16) her eingesetzt ist.

## Revendications

1. Connecteur (2) de fibres optiques destiné à connecter optiquement un câble optique (4) à un dispositif électro-optique actif (6), le connecteur comportant : un corps (10) ayant une partie de base (12) ; un bras flexible (14) s'étendant depuis le corps (10) dans une disposition espacée et superposée au-dessus de la surface de la partie de base (12), la partie de base et le bras définissant un canal rectiligne (38, 46) destiné à recevoir le câble optique (4) ; et un logement (16) formé dans le corps à l'extrémité intérieure du canal pour recevoir le dispositif électro-optique (6), ledit logement renfermant une fenêtre optique (25) alignée avec ladite extrémité intérieure du canal (38, 46) et lui faisant face, caractérisé par des moyens (18) sur le corps (10), supportant de façon pivotante un levier (20) de manoeuvre ayant une surface de came (82) située au-dessus du bras, le levier étant mobile entre une première position angulaire d'insertion de câble dans laquelle la surface de came (82) est dégagée du bras (14) afin de permettre l'insertion d'une extrémité du câble (4), en passant par l'autre extrémité extérieure du canal (38, 46), jusqu'en position de transmission de lumière ou de réception de lumière par rapport à la fenêtre optique (25) lorsque le dispositif électro-optique (6) est reçu dans le logement (16), et une deuxième position angulaire de retenue du câble dans laquelle la surface de came (82) porte contre le bras et sollicite le bras (14) contre le câble, grâce à quoi le câble est serré entre des surfaces opposées du bras (14) et de la base (12).

2. Connecteur selon la revendication 1, dans lequel le levier (20) de manoeuvre présente une autre surface de came (84) et est réglable sur lesdits moyens de support (18) de façon à se déplacer entre une troisième position angulaire de réception de câble dans laquelle l'autre surface de came (84) est dégagée du bras (14) et une quatrième position angulaire de retenue du câble dans laquelle l'autre surface de came (84) porte contre le bras et sollicite le bras contre le câble (4), lesdites troisième et quatrième positions angulaires étant espacées angulairement desdites première et deuxième positions angulaires.

3. Connecteur selon la revendication 2, dans lequel le levier (20) de manoeuvre est mobile entre ses première et deuxième positions angulaires lorsque l'extrémité du levier (20) est proche de l'extrémité extérieure du canal (38, 46), le levier (20) étant mobile entre ses troisième et quatrième positions angulaires lorsque le levier (20) fait saillie au-dessus du bras mobile (14) dans une direction transversale au bras (14).

4. Connecteur selon la revendication 1, 2 ou 3, dans lequel une surface plate (86) sur le levier (20) de manoeuvre fait face au bras (14) dans ladite première position angulaire du levier, la surface plate (86) étant contiguë à la, ou chaque, surface de came (82, 84) du levier (20).

5. Connecteur selon la revendication 2 ou 3, dans lequel des surfaces plates respectives (86, 88) sur le levier (20) font face au bras (15) dans les première et troisième positions angulaires du levier, l'une desdites surfaces plates (86) étant contiguë aux deux surfaces de came.

6. Connecteur selon la revendication 5, dans lequel le levier (20) présente encore une autre surface de came (89) opposée à l'une desdites surfaces de came (82) afin que le levier puisse être positionné sur lesdits moyens de support (18) dans chacune de deux orientations.

7. Connecteur selon la revendication 2, 3, 5 ou 6, dans lequel lesdits moyens (18) de support pour le levier (20) comprennent une première rainure (64) destinée à recevoir un tenon (78) sur le levier, guidant le mouvement du levier (20) entre ses première et deuxième positions angulaires, et une seconde rainure (66) espacée angulairement de la première rainure (64) pour recevoir la saillie (78) afin de guider le mouvement du levier (20) entre ses troisième et quatrième positions angulaires.

8. Connecteur selon la revendication 1, dans lequel le levier (20) comporte deux branches (74) espacées l'une de l'autre transversalement au bras (14), l'une desdites branches (74) se terminant par ladite surface de came (82), l'autre branche (74) se terminant par une surface de came similaire (82), lesdites surfaces de came (82) portant contre le bras (14) sur des côtés opposés du câble (4), dans la deuxième position angulaire du levier, pour faire fléchir élastiquement le bras (14) autour du câble.

9. Connecteur selon la revendication 8, dans lequel lesdits moyens (18) de support comprennent deux pattes (58) s'élevant de la base (12) de chaque côté du bras (14), chaque patte (58) ayant une paroi supérieure courbe (60), de manière qu'un tourillon (80) sur chaque branche (74) soit engagé au-dessous de la paroi supérieure (60) de l'une, respective, des pattes (58), et qu'un tenon (78) fasse saillie du levier (20) au-dessus de chaque tourillon (80) et puisse entrer en contact de glissement avec une rainure périphérique (64) dans la surface supérieure de la paroi supérieure courbe (60).

10. Connecteur selon la revendication 9, dans lequel chaque branche (74) se termine par une autre surface de came (89) espacée angulairement de la première surface de came citée (82), la surface supérieure (62) de chaque paroi supérieure (54) étant formée de façon à présenter une autre rainure périphérique (66) espacée angulairement de la première rainure périphérique citée (64), chaque tenon (78) étant engagé en glissant dans l'une, respective, desdites autres rainures périphériques (64, 66), le levier (20) ayant une troisième position angulaire de réception de câble dans laquelle chacune desdites autres surfaces de came (89) est dégagée du bras (14) et une quatrième position angulaire de retenue de câble dans laquelle chacune desdites autres surfaces de came (89) porte contre le bras (14) sur un côté respectif du câble (4) pour pousser le bras (14) contre le câble (4).

11. Connecteur selon l'une quelconque des revendications précédentes, dans lequel la base (12) comporte un ergot (52) qui en fait saillie pour s'ajuster étroitement dans un trou d'une plaquette à circuit imprimé (8), un peigne (53) d'espacement de conducteurs faisant saillie de la base (12), au-delà du logement (16), pour recevoir des conducteurs (23) du dispositif électro-optique (6) afin que des parties extrêmes des conducteurs (23) puissent sortir de la base (12) dans une disposition parallèle à l'ergot (52).

12. Connecteur selon l'une quelconque des revendications précédentes, dans lequel la base (12) est formée de façon à présenter un trou de serrure (48) s'ouvrant dans une direction s'éloignant du bras (14), pour recevoir étroitement et à frottement un oeillet à bride (50) à souder, inséré dans le trou de serrure (48) depuis l'extrémité de la base éloignée du logement (16).
